# EUROPÄISCHE PATENTSCHRIFT

(11) **EP 2 372 300 B1**
(45) Veröffentlichungstag und Bekanntmachung des Hinweises auf die Patenterteilung: **02.04.2014**
(21) Anmeldenummer: 10154533.3
(22) Anmeldetag: 24.02.2010
(51) Int. Cl.: G01B 5/016, G01B 11/00, G01C 15/06

(54) **Tastersatz zum Bilden von Messtastern für optische 3D-Messungen**
Scanner set for forming measuring scanners for optical 3D measurements
Ensemble pour palpeur destiné à former des palpeurs de mesure pour mesures 3D optiques

(43) Veröffentlichungstag der Anmeldung: 05.10.2011
(73) Patentinhaber: AICON 3D Systems GmbH, 38114 Braunschweig (DE)
(72) Erfinder: Schneider, Carl-Thomas, 38124 Braunschweig (DE); Bösemann, Werner, 38116 Braunschweig (DE)
(74) Vertreter: Raffay & Fleck

(56) Entgegenhaltungen:
- DE-A1- 10 258 579
- DE-A1- 19 724 739
- DE-A1- 19 960 191
- US-B1- 6 175 647
- US-B1- 6 724 930

## Beschreibung

Die Erfindung betrifft einen Tastersatz zum Bilden von wenigstens zwei unterschiedlich geformten, handgehaltenen Tastern, die für die optische dreidimensionale Vermessung von Messpunkten auf Objekten verwendet werden. Entsprechende mit dem Tastersatz zu bildende Taster weisen einen Tastkörper sowie eine Bedieneinheit auf. Der Tastkörper enthält dabei eine Tastspitze zum Anlegen an zu vermessenden Punkten sowie Messmarkierungen, anhand derer der Tastkörper erkannt und in seiner Lage im Raum ausgewertet werden kann.

Die optische Vermessung von komplex geformten dreidimensionalen Gegenständen mittels insbesondere der Fotogrammetrie ist bekannt und wird im Stand der Technik vielfach angewendet. Neben der direkten Aufbringung von Messmarkierungen auf dem Objekt (z.B. durch Aufkleben) ist es auch bekannt, hier Taster (hier auch als Messtaster bezeichnet) zu verwenden, die eine Tastspitze und einen mit Messmarkierungen versehenen Tastkörper aufweisen. Mit der Tastspitze hält ein Messtechniker während der optischen Vermessung den Taster auf einen hinsichtlich seiner Lage und Koordinaten im Raum zu bestimmenden Punkt, z.B. eine Bohrung im Blech einer Autotür oder dgl. Mit dem optischen Messsystem wird dann die Lage des Messtasters bestimmt und aus dessen bekannter Geometrie auf die Position der Tastspitze im Raum und damit auf die Koordinaten des zu vermessenden Punktes an dem Objekt geschlossen. Diese Art der Vorgehensweise wird insbesondere gewählt, wenn Punkte auf einem Objekt vermessen bzw. hinsichtlich ihrer Lage in einem Koordinatensystem bestimmt werden müssen, die für das optische Messsystem nicht unmittelbar einsehbar sind, da sie z.B. nicht sichtbar in einem Hinterschnitt liegen oder durch sonstige Strukturen verdeckt sind. Derartige Taster sind typischerweise mit einer Bedieneinheit ausgestattet, mit welcher der Messtechniker, der den Taster mit der Tastspitze an den zu vermessenden Punkt hält, bei korrekter Anlage des Tasters die Messung auslösen (das optische Messgerät bedienen) kann.

Solche Messtaster sind beispielsweise in der DE 197 21 903 C1 oder in der EP 0 607 303 B1 gezeigt und in ihrem Zusammenwirken mit einem optischen Messsystem erläutert.

Die Messmarkierungen auf dem Tastkörper können dabei unterschiedlicher Art sein. So sind Taster bekannt, die aktive Lichtquellen an dieser Stelle aufweisen, wie dies in der EP 0 607 303 B1 beschrieben ist. Solche Lichtquellen können z.B. durch LED's realisiert sein. Gleichermaßen bekannt sind aber auch reflektierende Messmarkierungen, z.B. in Form einfacher kreisförmiger, auf dem Tastkörper aufgebrachter Reflektorfolien oder auch komplizierter aufgebauter Messmarkierungen mit Kreisringabschnitten zur unterschiedlichen Indizierung und individualisierten Kenntlichmachung einzelner Messmarken.

Patent Dokument US 6 724 930 B1 offenbart unterschiedlich geformte Tastspitzen, die von Hand geführt werden, und die jeweils Messmarkierungen aufweisen, mit denen die Lage im Raum gemessen werden kann. Patent Dokument US 6 175 647 B1 offenbart dagegen eine handgeführte Bedieneinheit, an der drei Kameras so angebracht sind, dass durch Aufnahme von im Raum verteilten Messmarkierungen die Lage der Bedieneinheit festgestellt werden kann. An der Bedieneinheit sind austauschbar verschiedene Tastspitzen anbringbar.

Für die optische 3D-Vermessung verschiedener Objekte, insbesondere solcher mit schwer zugänglichen zu vermessenden Messpunkten, genügt es häufig nicht, nur einen geometrisch bestimmt ausgebildeten Messtaster zu verwenden. Je nach Lage des zu vermessenden Punktes sind oft längere oder kürzere Tastspitzen erforderlich, in einigen Fällen müssen diese zum Erreichen besonders verborgener Messpunkte sogar abgewinkelt oder gebogen sein.

Entsprechend gilt es an Messplätzen eine große Anzahl von Tastern zu bevorraten, die dann abhängig von der jeweiligen Anforderung zum Einsatz kommen. Dabei ist in der Regel jeder der bevorrateten Taster ein vollständig funktionstüchtig ausgebildeter Taster mit Tastkörper und mit diesem unlösbar verbundener Bedieneinheit. Neben einem hohen Bedarf an Lagerraum bedingt ein derartig zu bevorratender Tastersatz, der aus einer Vielzahl von vollständig gebildeten und in sich abgeschlossenen Tastern besteht, einen hohen Kostenaufwand. Insbesondere die Bedieneinheit stellt ein kostspieliges Element dar, da diese in der Regel mit eigener Intelligenz, d.h. mit Steuerbausteinen, Schnittstellen und dgl. ausgerüstet ist. Die Bedieneinheit macht dabei einen wesentlichen, wenn nicht sogar den überwiegenden Teil der Gestehungs- und damit Beschaffungskosten eines einzelnen Tasters aus.

Entsprechend gibt es bereits Bestrebungen, Tastersets zu bilden, die mit einer reduzierten Anzahl von Grundteilen eine Mehrzahl von Kombinationsmöglichkeiten gestatten, um bedarfsabhängig verschiedene Taster zusammenstellen zu können. Der hier im Stand der Technik bekannte und verfolgte Ansatz sieht vor, dass an einen mit einer Bedieneinheit fest verbundenen Tastkörper unterschiedliche Tastspitzen angesetzt werden können, aus denen jeweils eine für die Lage des zu vermessenden Punktes auf dem Objekt geeignete Tastspitze ausgewählt und mit dem fest mit der Bedieneinheit verbundenen Tastkörper zum Bilden eines Tasters zusammengefügt werden kann.

Zwar kann auf diese Weise ein erhöhtes Maß an Flexibilität erhalten werden, der Tastersatz ist insgesamt kostengünstiger, da er mit einem einzigen Tastkörper mit damit verbundener Bedieneinheit auskommen kann. Allerdings weist dieses System Unzulänglichkeiten auf:
So ist zunächst die Verbindung zwischen den Tastspitzen und dem Tastkörper eine Schwachstelle. Für die erforderlichen, hochgenauen Messungen der Lage des jeweils anzupeilenden Messpunktes auf dem Objekt bzw. in einem dreidimensionalen Koordinatensystem muss die Geometrie des Tasters, der ja selbst ein Referenzkoordinatensystem in der Messung darstellt, exakt bekannt und reproduzierbar sein. Dadurch, dass die Tastspitzen von dem Taster lösbar gestaltet und an einer Verbindungsstelle mit dem Tastkörper verbindbar sind, können hier bei Auftreten eines Spiels Abweichungen in der Geometrie des so gebildeten Tasters auftreten, die sich in einer geringeren Genauigkeit der Messung widerspiegeln. Auch sind beim Verbinden der Messspitze mit dem Tastkörper Bedienfehler möglich, indem diese Verbindung z.B. nicht in der korrekten Geometrie ausgeführt und somit die Geometrie des fertig gestellten Tasters noch weiter verfälscht wird. Schließlich muss, damit das Messsystem die aktuelle Geometrie des Tasters kennt (was wegen der Lage der unterschiedlichen Koordinatensysteme des Objektes und des Tastkörpers zueinander und der daraus abzuleitenden Berechnung der Lage des Messpunktes im Raum unerlässlich ist) die jeweils verwendete Messspitze bzw. die Art des fertig gebildeten Tasters in das System eingegeben werden. Typischerweise geschieht dies durch eine Bedienperson, den Messtechniker, in manueller Eingabe. Kommt es hierbei zu einer Fehleingabe, so ist die durchgeführte Messung insgesamt fehlerhaft und nicht zu verwenden. Schlimmstenfalls werden z.B. Produkte als Ausschuss gekennzeichnet, die tatsächlich innerhalb der Fertigungstoleranzen lagen.

Hier soll mit der Erfindung Abhilfe geschaffen werden. So ist es Aufgabe der Erfindung, einen Tastersatz zum Bilden von wenigstens zwei unterschiedlich geformten Tastern der eingangs erwähnten Art dahingehend weiterzubilden, dass dieser zuverlässig und sicher eine genaue Messung eines zu vermessenden Punktes auf einem Objekt erlaubt und dennoch eine Kostenreduzierung in der Anschaffung eines solchen Tastersatzes erwirkt.

Die Aufgabe wird gelöst durch einen Tastersatz mit den Merkmalen des Patentanspruchs 1. Vorteilhafte Weiterbildungen sind in den abhängigen Unteransprüchen 2 bis 8 angegeben.

Der erfindungsgemäße Ansatz besteht nun darin, einen Tastersatz der eingangs genannten Art so auszubilden, dass dieser wenigstens zwei unterschiedlich geformte Tastkörper aufweist, an denen wenigstens eine ebenfalls zu dem Tastersatz gehörige Bedieneinheit wahlweise lösbar angebracht werden kann. Die Tastkörper sind dabei vollständige Tastkörper, umfassen also insbesondere eine fest mit diesem verbundene Tastspitze. Damit wird verhindert, dass sei es durch eine Fehlbedienung der Zusammenfügung von Taster und Tastspitze bei dem Tastersätzen nach dem Stand der Technik oder sei es durch ein zunehmendes Spiel eine Veränderlichkeit in die Geometrie des Tasters eingebracht und somit eine Ungenauigkeit der Messung erzeugt wird. Dennoch kann mit der erfindungsge-.. mäßen Lösung eine Vereinfachung, insbesondere eine Kostensenkung des Tastersatzes verglichen mit einem Tastersatz aus vollständig jeweils mit Tastkörper und Bedieneinheit gebildeten Tastern erreicht werden.

Dabei ist es zusätzlich unerheblich, ob die Bedieneinheit, die zugleich eine Handhabe bzw. einen Handgriff darstellt bzw. enthält, stets in reproduzierbar gleicher Position des Tastkörpers angebracht wird. Entscheidend ist hier allein, dass sie in ihrer Anordnung an dem Tastkörper keine Messmarken verdeckt, und so die Erkennbarkeit des Tastkörpers für das Messgerät bzw. ein daran angeschlossenes Rechnersystem eines Messsystems gewährleistet.

Auch bei dem Tastersatz gemäß der Erfindung ist es natürlich wichtig, dass das Messsystem erkennt, welcher Taster bzw. welcher Tastkörper aktuell für die Messung verwendet wird, um dessen Koordinatensystem in seiner Relativlage zu einem Koordinatensystem des zu vermessenden Objektes zu bestimmen und bei der Ermittlung der Koordinaten des zu vermessenden Punktes zu berücksichtigen. Hier kann in besonders einfacher Weise und ohne dass ein menschliches Eingreifen erforderlich ist, für eine automatische Erkennbarkeit und Zuordnung des jeweils gewählten Tastkörpers Sorge getragen werden. Dies kann nämlich dadurch gesehen, dass die Tastkörper des Tastersatzes mit abweichend gestalteten und/oder angeordneten Messmarkierungen versehen sind, die bei beliebiger Lage im Raum eine eindeutige Identifizierung des jeweiligen Tastkörpers durch das optische Messgerät bzw. ein mit diesem verbundenes Auswertesystem ermöglichen. Auf diese Weise kann also beim Messvorgang erkannt werden, welcher Tastkörper gerade verwendet wird und damit aus einer entsprechenden Bibliothek in dem Messsystem dessen Koordinatensystem bzw. die Lage desselben relativ zu der Tastspitze ausgelesen und für die weitere Auswertung der Messung verwendet werden. Somit kann also das erfindungsgemäße System besonders fehlersicher gestaltet werden, indem trotz der erhöhten Flexibilität Fehler aufgrund von Fehlbedienungen, wie sie bei dem Tastersatz nach dem Stand der Technik vorkommen können, ausgeschlossen werden.

Alternativ oder zusätzlich kann jeder der Tastkörper auch mit einer diesen individuell identifizierenden ldentifikationskennung versehen werden, die automatisch auslesbar ist. Wenn dann zugleich die Bedieneinheit mit einem entsprechenden Lesegerät versehen wird, kann beim Zusammenführen dieser beiden Elemente die Bedieneinheit eine Kennung des gerade verwendeten Tastkörpers auslesen und entsprechend an das Auswertesystem weiterleiten. Dadurch, dass die Tastkörper vergleichsweise voluminös gebildet sind, können dort in einfacher Weise entsprechende Identifikationskennungen untergebracht werden, beispielsweise ein Barcode an einer mit der Bedieneinheit zu verbindenden Stelle, wenn in der Bedieneinheit ein entsprechendes Lesegerät vorhanden ist, ein RFID-Chip, der von einem entsprechenden Lesegerät in der Bedieneinheit drahtlos ausgelesen werden kann, ein über entsprechende Kontakte zu kontaktierender Speicherchip oder dgl.

Da eine solche Lösung jedoch einen Mehraufwand und Einsatz weiterer Elemente bedeutet, der letztlich auch gewisse Anfälligkeiten mit sich bringt, wird die zuvor beschriebene Methode der einfachen Erkennung über geschickte Gestaltung und Anordnung der Messmarkierungen bevorzugt.

Der Tastersatz nach der Erfindung weist vorzugsweise weniger Bedieneinheiten als Tastkörper auf. Zwar ist es grundsätzlich möglich, z.B. unterschiedliche Bedieneinheiten mit unterschiedlichen Funktionen in größerer oder gleicher Zahl zu halten wie unterschiedliche Tastkörper, um auch hierüber erweiterte Kombinationsmöglichkeiten zu generieren. Jedoch wird dies kaum erforderlich sein, so dass man in der Regel mit weniger Bedieneinheiten als Tastkörpern, insbesondere mit einer einzigen Bedieneinheit für einen vollständigen Tastersatz auskommen wird.

Die lösbare Verbindung der Bedieneinheit mit den Tastkörpern kann vorzugsweise über eine Clipsverbindung, magnetisch oder eine Bajonettverbindung erfolgen.

Wie bereits zuvor angedeutet, hat das Bediengerät bevorzugt eine Datenübermittlungseinrichtung zur Übermittlung von Daten zu einem zentralen Steuergerät für die Steuerung des optischen Messgerätes. Über diese Datenübermittlungseinrichtung werden insbesondere Signale für die Auslösung einer Messung übermittelt, die der Messtechniker durch Bedienen eines entsprechenden Schaltelementes bei korrekt an dem zu vermessenden Punkt angesetztem Taster auslösen kann. Über diese Datenübermittlungseinrichtung können aber auch weitere Daten, wie beispielsweise Daten über den verwendeten Tastkörper, wenn dieser in der zuvor beschriebenen möglichen Realisierungsform mit einer Identifikationskennung versehen ist, an das zentrale Steuergerät übermittelt werden. Zwar ist es möglich, die Datenübermittlungseinrichfiung über Kabel an das zentrale Steuergerät anzuschließen, allerdings wird hier eine drahtlose Übermittlung bevorzugt, z.B. über Bluetooth oder eine WLAN-Anbindung. Mit besonderem Vorteil kann die Datenübermittlungseinrichtung bidirektional, also auch zum Empfang von Daten aus dem zentralen Steuergerät eingerichtet sein. Dies erlaubt die Aufnahme von Rückmeldungen und ähnlichen Signalen von der Steuereinrichtung zur weiteren Verarbeitung in der Bedieneinrichtung. So kann beispielsweise ein Quittierungssignal nach abgeschlossener Messung gesendet werden, um dem Messtechniker, anzuzeigen, dass er mit einer neuen Messung beginnen kann.

Weitere Vorteile und Merkmale der Erfindung ergeben sich aus der nachfolgenden Beschreibung eines Ausführungsbeispiels anhand der beigefügten Figuren. Dabei zeigen:
- Fig. 1 a und 1b: in schematischer Darstellung ein Bedienelement des erfindungsgemäßen Tastersatzes mit zwei unterschiedlichen Tastkörpern; und
- Fig. 2: in zusammengefügtem Zustand das Bedienelement mit dem Tastkörper gemäß Fig. 1a zum Bilden eines Tasters.

Die Figuren zeigen rein schematische Darstellungen und sind weder maßstabsgerecht noch detailgetreu. Sie dienen vielmehr der prinzipiellen Veranschaulichung eines möglichen Ausführungsbeispiels der Erfindung und der näheren Erläuterung der für diese relevanten Merkmale.

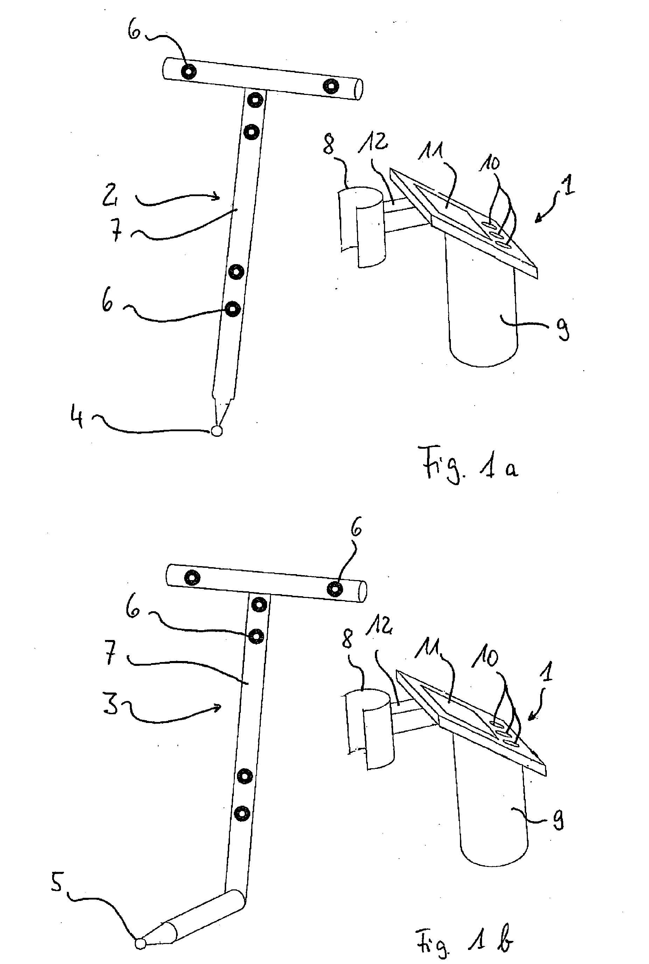

In Figuren 1 a und 1 b sind als Bestandteile eines erfindungsgemäßen Tastersatzes eine Bedieneinheit 1 mit unterschiedlichen Tastkörpern 2 (Fig. 1a) und 3 (Fig. 1 b) dargestellt. Die Tastkörper 2 und 3 sind unterschiedlich gestaltet, weisen insbesondere unterschiedliche Ausgestaltungen der fest mit dem Tastkörper verbundenen und unlösbar an diesem angeordneten Tastspitzen 4 bzw. 5 auf. Während die Tastspitze 4 an dem Tastkörper 2 in seinem unteren Bereich in geradem Verlauf der Längsrichtung des Tastkörpers angeordnet ist, findet sich die Tastspitze 5 am Ende einer zu dem Längsverlauf des Tastkörpers 3 abgewinkelten Verlängerung. Somit dient der Tastkörper 3 zum Erreichen besonders verborgener Messpunkte an einem Objekt. Die Tastspitzen 4 und 5 sind jeweils kugelförmig gebildet, um eine möglichst genaue Anlage an einem zu vermessenden Punkt zu ermöglichen. Sie können aber auch als Spitze oder in anderer geeigneter Form ausgeformt sein. Auf beiden Tastkörpern 2 bzw. 3 sind Messmarkierungen 6, im vorliegenden Fall reflektierende Klebeplättchen, aufgebracht. Es kommen jedoch auch andere Messmarkierungen, z.B. selbstleuchtende Elemente wie etwa LED's in Betracht.

In einem Bereich 7 sind in beiden Tastkörpern 2 bzw. 3 keine Messmarkierungen 6 angeordnet. Dieser Bereich 7 dient jeweils der Verbindung mit der Bedieneinheit 1, die hierfür ein an den Durchmesser des Tastkörpers 2 bzw. 3 angepasstes Clipselement 8 aufweist. Anstelle des Clipselementes oder zusätzlich zu diesem können auch magnetische Halteelemente oder eine Bajonettverbindung vorgesehen sein.

Die Bedieneinheit 1 weist einen Griffabschnitt 9 zum Erfassen der Bedieneinheit und damit zum Halten des mit dieser verbundenen Tastkörpers 2 bzw. 3 auf. In dem Abschnitt im Inneren der Bedieneinheit 1 angeordnet befinden sich hier einzelne Elektronikbauelemente, wie etwa Steuer- und Regelbausteine, Speicherelemente und insbesondere eine Datenkommunikationseinheit zum drahtlosen Datenaustausch mit einer hier nicht gezeigten zentralen Steuereinrichtung eines optischen Messsystems, mit dem der Tastkörper 2 bzw. 3 optisch abgebildet und hinsichtlich seiner Lage im Raum ausgewertet wird zur Bestimmung der Koordinaten des angepeilten Punktes auf dem zu vermessenden Objekt.

An der Bedieneinheit 1 sind ferner Bedienschalter 10 angeordnet, über die eine Bedienperson, insbesondere ein Messtechniker, Aktionen auslösen kann, z.B. eine Messung starten, wenn der Taster mit der Tastspitze korrekt an dem zu vermessenden Punkt an dem Objekt anliegt. Schließlich ist eine optische Anzeigeeinheit 11 angeordnet, über welche der Bedienperson Informationen übermittelt werden können. Wie sich aus der Gesamtschau der Figuren 1 a und 1 b ergibt, besteht ein hier in minimaler Bestückung dargestellter Tastersatz aus einer Bedieneinheit 1 und wenigstens zwei Tasterkörpern, nämlich den unterschiedlich geformten Tasterkörpern 2 und 3. Aus diesen drei Einzelteilen können je nach dem, ob die Bedieneinheit 1 mit dem Tasterkörper 2 oder aber mit dem Tasterkörper 3 verbunden wird, zwei unterschiedliche Taster gebildet werden. Auch wenn hier zur Vereinfachung die Tasterkörper 2 und 3 mit identischer Bestückung mit Messmarkierungen 6 dargestellt sind, weisen in einer tatsächlichen Ausgestaltung die unterschiedlichen Tasterkörper bevorzugt solchermaßen verschiedenartige Bestückungen mit Messmarkierungen 6 auf, dass sie in beliebiger Lage im Raum und Orientierung zu dem optischen Messgerät von einer zentralen Steuereinheit erkannt und so unterschieden werden können. Auf diese Weise kann das System ohne Zutun eines Anwenders bzw. ohne eine erforderliche Eingabe desselben erkennen, welcher der beiden Tastkörper 2 oder 3 gerade verwendet wird und somit die Lage des Koordinatensystems des Tasters, genauer der Tastspitze 4 bzw. 5 ermitteln und korrekt in Relation zu dem Koordinatensystem des zu vermessenden Objektes setzen.

Selbstverständlich ist es auch möglich, z.B. in dem Bereich 7 der Tastkörper 2 bzw. 3 dort individualisierende Identifikationskennungen anzuordnen, z.B. durch Einbinden eines RFID-Chips. In einem solchen Falle wäre dann in der Bedieneinheit 1 im Bereich des Clipselementes 8 bzw. des dieses mit den weiteren Elementen der Bedieneinheit 1 verbindenden Steges 12 ein Lesegerät anzuordnen, welches die erkannten Daten des jeweiligen Tastkörpers ausliest und der entsprechenden Elektronik in dem Bedienelement 1 zuführt, die die Daten dann schließlich an die zentrale Steuereinheit des optischen Messsystems weiterleitet.

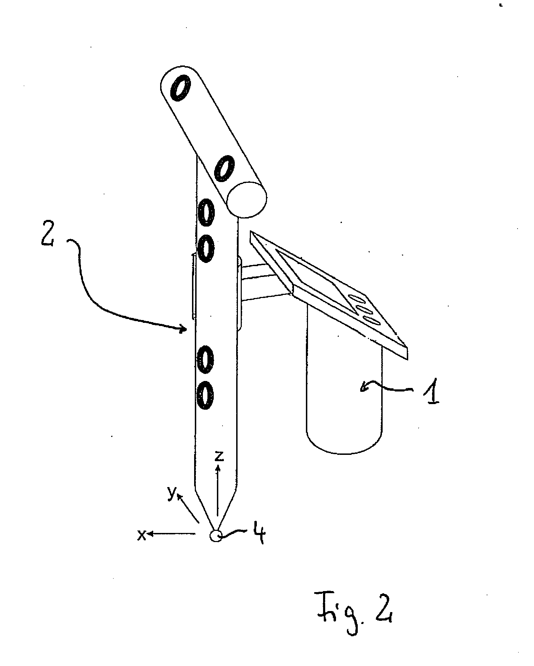

In Fig. 2 ist noch einmal zur Veranschaulichung dargestellt, wie die Bedieneinheit 1 mit dem Tastkörper 2 verbunden ist und so einen möglichen Taster des Tastersatzes bildet. Zudem ist an der Messspitze 4 das dort gewählte Koordinatensystem durch Einzeichnung der Raumrichtungen X, Y und Z angedeutet.

### Bezugszeichenliste

- 1: Bedieneinheit
- 2: Tastkörper
- 3: Tastkörper
- 4: Tastspitze
- 5: Tastspitze
- 6: Messmarkierung
- 7: Bereich
- 8: Clipselement
- 9: Griffabschnitt
- 10: Bedienschalter
- 11: Optische Anzeigeeinheit
- 12: Steg

## Patentansprüche

1. Tastersatz zum Bilden von wenigstens zwei unterschiedlich geformten, jeweils aus einem Tastkörper (2, 3) und einer Bedieneinheit (1) gebildeten, handgehaltenen Tastern, wobei
i) der Tastersatz wenigstens zwei unterschiedlich geformte, jeweils eine Tastspitze (4, 5) zum Anlegen an ein zu vermessendes Objekt aufweisende Tastkörper (2, 3) aufweist, wobei die Tastkörper (2, 3) jeweils mit Messmarkierungen (6) versehen sind, die dazu ausgebildet sind den jeweiligen Tastkörper (2, 3) und seine Lage im Raum mittels eines optischen Messgerätes zu erkennen,
ii) der Tastersatz wenigstens eine Bedieneinheit (1) aufweist,
**dadurch gekennzeichnet, dass**
iii) die unterschiedlich geformten Tastkörper (2, 3) in dem Tastersatz getrennt von der Bedieneinheit vorliegen und jeweils mit der Bedieneinheit (1) zum Bilden wenigstens zweier unterschiedlich geformter Taster lösbar verbindbar sind.

2. Tastersatz nach Anspruch 1, **dadurch gekennzeichnet, dass** er weniger Bedieneinheiten (1) als Tastkörper (2, 3) aufweist.

3. Tastersatz nach Anspruch 2, **dadurch gekennzeichnet, dass** er eine einzige Bedieneinheit (1) aufweist.

4. Tastersatz nach einem der vorhergehenden Ansprüche, **dadurch gekennzeichnet, dass** die Bedieneinheit (1) mit den Tastkörpern (2, 3) über eine Clipsverbindung (8), magnetisch oder über eine Bajonettverbindung lösbar verbindbar ist.

5. Tastersatz nach einem der vorhergehenden Ansprüche, **dadurch gekennzeichnet, dass** die Tastkörper (2, 3) mit automatisch auslesbaren Identifikationskennungen versehen sind und dass die Bedieneinheit (1) ein Lesegerät zum Auslesen der Identifikationskennungen, wenn einer der Tastkörper (2, 3) mit dem Bediengerät verbunden ist, aufweist.

6. Tastersatz nach einem der vorhergehenden Ansprüche, **dadurch gekennzeichnet, dass** die unterschiedlichen Tastkörper (2, 3) mit abweichend gestalteten und/oder angeordneten Messmarkierungen (6) versehen sind, die bei beliebiger Lage im Raum eine eindeutige Identifizierung des jeweiligen Tastkörpers (2, 3) durch das optische Messgerät bzw. ein mit diesem verbundenes Auswertesystem ermöglichen.

7. Tastersatz nach einem der vorhergehenden Ansprüche, **dadurch gekennzeichnet, dass** das Bediengerät (1) eine Datenübermittlungseinrichtung zur vorzugsweise drahtlosen Übermittlung von Daten zu einem zentralen Steuergerät für die Steuerung des optischen Messgerätes aufweist.

8. Tastersatz nach Anspruch 7, **dadurch gekennzeichnet**, das die Datenübermittlungseinrichtung auch zum Empfang von Daten von dem zentralen Steuergerät eingerichtet ist.

## Claims

1. A feeler unit for providing at least two hand-held feelers, of different design, each formed of a feeler body (2, 3) and an operating unit (1), whereas
i) the feeler unit comprises at least two feeler bodies (2, 3) of different design, presenting respectively a feeler tip (4, 5) for application to an object to be measured, while the feeler bodies (2, 3) are respectively fitted with measure markings (6), which are designed to detect the respective feeler body (2, 3) and its position in space by means of an optical measuring instrument,
ii) the feeler unit presents at least one operating unit (1),
**characterised in that**
iii) the feeler bodies (2, 3) of different design are arranged separately from the operating unit in the feeler body and can be connected releasably respectively with the operating unit (1) to build at least two feelers of different design.

2. A feeler unit according to claim 1, **characterised in that** it presents fewer operating units (1) than feeler bodies (2, 3).

3. A feeler unit according to claim 2, **characterised in that** it presents a single operating unit (1).

4. A feeler unit according to any of the preceding claims, **characterised in that** the operating unit (1) can be connected with the feeler bodies (2, 3) magnetically via a clips connection (8) or releasably via a bajonett connection.

5. A feeler unit according to any of the preceding claims, **characterised in that** the feeler bodies (2, 3) are provided with automatically readable identification labels and that the operating unit (1) presents a reader for reading the identification labels when one of the feeler bodies (2, 3) is connected to the operating device.

6. A feeler unit according to any of the preceding claims, **characterised in that** the different feeler bodies (2, 3) are provided with measure markings (6) with deviating shapes and/or arrangements, which enable in any position in space straightforward identification of the respective feeler body (2, 3) through the optic measuring device or an interpretation system connected therewith.

7. A feeler unit according to any of the preceding claims, **characterised in that** the operating device (1) presents a data transmission device for preferably wireless transmission of data to a central control device for controlling the optic measuring device.

8. A feeler unit according to claim 7, **characterised in that** the data transmission device is also installed for receiving data from the central control device.

## Revendications

1. Groupe palpeur constituant au moins deux palpeurs portables, de conception différente, formé respectivement d'un corps de palpeur (2, 3) et d'une unité de commande (1), où
i) le groupe palpeur présente au moins deux corps de palpeur (2, 3) de conception différente, comprenant respectivement une pointe de palpeur (4, 5) pour application sur un objet à mesurer, où les corps de palpeur (2, 3) sont pourvus respectivement de marquages de mesure (6), qui sont conçus pour détecter le corps de palpeur respectif (2, 3) et sa position dans l'espace à l'aide d'un instrument de mesure optique,
ii) le groupe palpeur présente au moins une unité de commande (1), **caractérisée en ce que**
iii) les corps de palpeur (2, 3) de conception différente sont disposés dans le groupe palpeur de façon distincte de l'unité de commande et sont connectés de façon amovible respectivement à l'unité de commande (1) pour constituer au moins deux palpeurs de conception différente.

2. Groupe palpeur selon la revendication 1, **caractérisé en ce qu'**il présente moins d'unités de commande (1) que de corps de palpeur (2, 3).

3. Groupe palpeur selon la revendication 2, **caractérisé en ce qu'**il présente une seule unité de commande (1).

4. Groupe palpeur selon l'une quelconque des revendications précédentes, **caractérisé en ce que** l'unité de commande (1) est connectée aux corps de palpeur (2, 3) magnétiquement par le biais d'une connexion à clips ou de façon amovible par le biais d'une connexion à baïonnette.

5. Groupe palpeur selon l'une quelconque des revendications précédentes, **caractérisé en ce que** les corps de palpeur (2, 3) sont pourvus d'étiquettes d'identification lisibles automatiquement et que l'unité de commande (1) présente un lecteur permettant de lire les étiquettes d'identification lorsque l'un des corps de palpeur (2, 3) est connecté à l'instrument de commande.

6. Groupe palpeur selon l'une quelconque des revendications précédentes, **caractérisé en ce que** les différents corps de palpeur (2, 3) sont pourvus de marquages de mesure (6) de conception et/ou d'arrangement distinct, que dans n'importe quelle position dans l'espace permettent une identification explicite du corps de palpeur respectif (2, 3) grâce à l'instrument de mesure optique ou bien un système d'interprétation connecté à celui-ci.

7. Groupe palpeur selon l'une quelconque des revendications précédentes, **caractérisé en ce que** l'appareil de commande (1) présente un dispositif de transmission des données pour une transmission de préférence sans fil de données à un appareil de commande central pour commander l'instrument de mesure optique.

8. Groupe palpeur selon la revendication 7, **caractérisé en ce que** le dispositif de transmission des données est agencé également pour recevoir des données de l'appareil de commande central.
